# EUROPEAN PATENT SPECIFICATION

(11) **EP 1 557 028 B1**
(45) Date of publication and mention of the grant of the patent: **04.07.2012**
(21) Application number: 03772276.6
(22) Date of filing: 30.10.2003
(51) Int. Cl.: H04L 29/08

(54) **INTERNET PROTOCOL BASED MULTIMEDIA SYSTEM (IMS)**
INTERNETPROTOKOLLBASIERTES MULTIMEDIASYSTEM
SYSTEME MULTIMEDIA FONDE SUR UN PROTOCOLE INTERNET (IMS)

(30) Priority: 31.10.2002 EP 02024256
(43) Date of publication of application: 27.07.2005
(73) Proprietor: T-Mobile Deutschland GmbH, 53227 Bonn (DE)
(72) Inventor: BEMMER, René, 53175 Bonn (DE); BRITSCH, Matthias, 53639 Thomasberg (DE)
(74) Representative: Riebling, Peter
(86) International application number: PCT/EP2003/012042
(87) International publication number: WO 2004/040880

(56) References cited:
- WO-A-01/65334
- WO-A-01/97543
- WO-A-99/33293
- US-A1- 2002 126 701
- LEISENBERG M ET AL: "MOMENTS - MULTIMEDIA SERVICES IN A NARROW-BANDWIDTH CELLULAR ENVIRONMENT" PROCEEDINGS OF THE EUROPEAN CONFERENCE ON MULTIMEDIA APPLICATIONS,SERVICES AND TECHNIQUES, XX, XX, 26 May 1998 (1998-05-26), pages 246-259, XP008006390
- SCHULZRINNE H ET AL: "THE SESSION INITIATION PROTOCOL: INTERNET-CENTRIC SIGNALING" IEEE COMMUNICATIONS MAGAZINE, IEEE SERVICE CENTER. PISCATAWAY, N.J, US, vol. 38, no. 10, October 2000 (2000-10), pages 134-141, XP000969736 ISSN: 0163-6804

## Description

The present invention relates to an Internet protocol based multimedia system (IMS) used within a mobile communication network. Generally, this invention relates to wireless digital communication systems and methods, and particularly to third generation (3G) networks and to mobile terminals that operate in such networks.

A communication via e-mail and short message service is well known. By using these communication methods it is not possible for a subscriber to send multimedia messages within a certain range of distance around his own location.

US 2002 0126701 A1 discloses a system an method for Internet protocol based multimedia communication which makes use of means for location information and media components during information exchange between a communication center and peripheral units. The means for location information and the media components are provided by at least a mobile communications network, whereby the communication center providing a transmission of messages via a mobile community service. The information exchange includes a transmission of messages via a mobile community service which allows the subscriber to send contact data from his mobile handset to mobile handsets of other users for approach of interested people by sending them a message of a chosen media type and vice versa. The system and method disclosed does not allow the user to send and receive messages depending on location information.

It is the object of the present invention to disclose an Internet protocol based multimedia system and a procedure which provides a subscriber of a mobile communication with enhanced multimedia services.

This object is achieved according to the features of the independent claims.

According to the independent apparatus claim of the present invention an Internet protocol based multimedia system is provided which is characterized by a combination of means for location information with media components during information exchange between a communication center and peripheral units. A procedure for information exchange using the components of such an Internet protocol based multimedia system is described in the independent method claim.

Further embodiments and preferred features of the invention are disclosed in the dependent claims.

The present invention offers to the user a so called Mobile Community Service which is described below.

Starting point for service definition was the aim to make use of the unique capabilities of mobile networks in general and unique features provided by IMS to combine them in a new service type. One of the unique capabilities of mobile networks is the availability of providing location information of a subscriber using a mobile terminal. Among mobile networks only IMS based networks allow the exchange of presence information and combination of media components in a session. The presented service exploits all this unique features of IMS based mobile networks.

The service according to the invention gives the subscriber the possibility to advertise his mobile handset for approach of interested people within a certain range around the subscribers current location by sending them a message of a chosen media type and vice versa, that means receiving a set of chosen media types from people within a certain range.

The service sequence is as follows:

A subscriber decides to become active in the mobile community, subsequently he logs in to the network and gets to the "mobile community" application menu in his terminal device.

There a choice is offered to change the mode to "interested in contact". By selecting this mode the choice between two modes is offered. He can become active and send his contact data to other users, named hereinafter "advertising" mode or he can decide to go for the inactive mode, not sending but receiving other community members data only, at further called "receiving" mode. Of course both modes can also operate in parallel.

For both possibilities the preferred name and media type can be specified.

If the "advertising" mode is chosen, the media type and the special content to be sent can be specified. Also, the region in which the content shall be sent to interested receivers can be specified.

The information content can be a text or a picture message, a video clip or a voice message. All the messages can be either recorded directly by using the handset capabilities or chosen from a set of pre-recorded contents. This contents can be stored on a personal account via a web interface at any time. The stored contents are offered on a selection menu automatically to the subscriber if the "advertising" mode is selected. To avoid the necessity of carrying a high end device that is able to host all applications necessary for recording of content, web access to the Internet is provided to all the users. This gives all the users the possibility to create content at their home PC and store it for later selection via the mobile's menu, where the pre-recorded content or content information (e. g.network data) is shown up automatically when the mobile terminal service module is activated. Content can also be predefined via web access so the mobile has not to deal with the content at all.

The region in which the content shall be distributed can be specified by abstract distribution classes, for example such as "local", "walking distance" and "city wide", The distribution class "local" would cover approximately the size of a radio cell and perhaps the neighboring cells, the distribution class "walking distance" would mean within a walking distance of 15 min and the distribution class "city wide" would mean in the borders of the city, but still reachable by public transportation. Other or additional distribution classes, such as "regional" or "national" would be also possible.

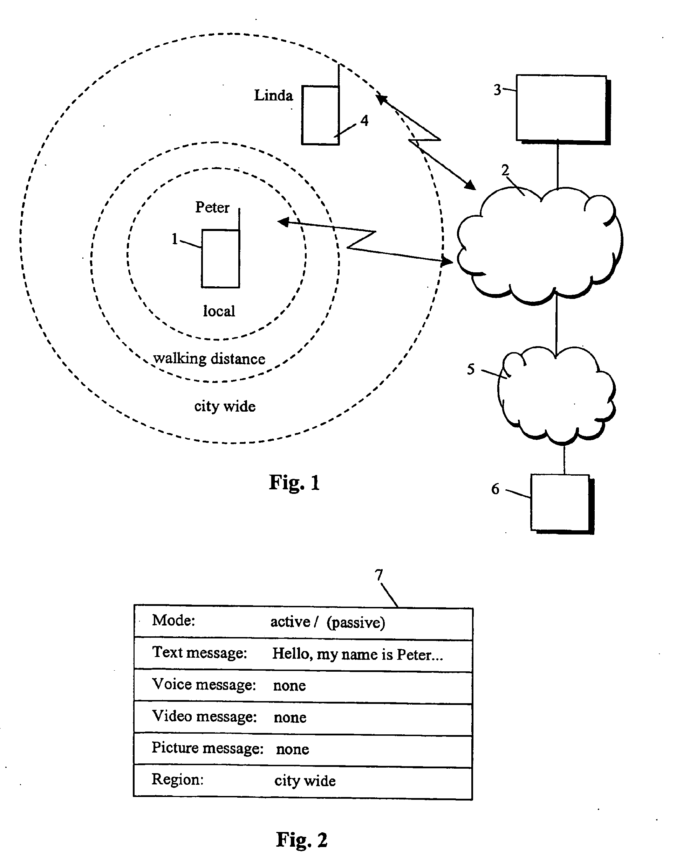

A typical user scenario - described in connection with drawing figures 1 and 2 - could look as follows:

Peter, a software consultant was sent to the city to support the customers IT department. In the evening he decides to relax in the city park: But as time goes by he feels lonesome and wishes to be in company. So he takes his mobile device 1 and enters the mobile community service by advertising his phone with the text message 7 (Fig. 2): "Hello, my name is Peter, I am looking for some company this evening to have some drinks and relaxed chatting". He decides to receive any message, text, picture, phone call or video message and advertises his device 1 in the whole city region as it is not too late in the afternoon. He decides to become active in the receiving mode at the same time. The message 7 is routed via the mobile communications network 2 to a communication center 3 where it is received and processed. The message is combined with a location information of Peter's mobile device 1 and transmitted via the mobile communications network 2 throughout the city. None of the received "advertisement" messages tracks his interest. But after some minutes a text message comes in, sent by Linda via her mobile device 4, who wants to put up a chat session to get in first contact. After some chatting Linda asks him if he can send a picture. Of course he does and in turn he asks Linda for a phone connection. After having chatted for a while Linda asks him for his preferred food, as she wants to join a vegetarian barbecue party and is looking for company. Peter is enthusiastic about vegetarian barbecue and they decide to meet one hour later to go for grilled cauliflower and roasted carrot.

The communication center 5 is also connected to the Internet 5 so that the user has the possibility to create content at his home Personal Computer 6 and store it for later selection via the mobile's menu.

### Further enhancements

For fast growing communities and a vast number of members, it could become difficult to decide for an "advertisement". This can easily be solved by differentiating the advertisements according to contact aims, such as personal contact or conversational contact only. Passing details with the advertisement by sending personal interest such as hobbies or planned activities can be supported by offering an addressable subject field that pops up at the receivers device and gives him the possibility to accept or refuse the session.

### Conclusions.

Packet based mobile networks of 2.5 and 3^{rd} generation are able to provide the capacity and reliability prerequisite to mass roll out of this service that has high potential to become adopted in the life of a considerable percentage of mobile subscribers. At present only IMS based networks are able to handle the features and media components necessary to create this new mobile community service.

## Claims

1. Internet protocol based multimedia system which uses means for location information and media components during information (7) exchange between a communication center (3) and peripheral units (1, 4), wherein the means for location information and the media components are included in at least a mobile communications network (2), and the communication center (3) providing a transmission of messages (7) via a mobile community service, **characterized in that** a subscriber to the Internet protocol based multimedia system can advertise his peripheral unit (1, 4) for approach of interested people within a certain range around the subscribers current location by sending a message of a chosen media type to the communication center and receiving a set of chosen media types from people within a certain range, wherein the set of chosen media types to be received is decided by the subscriber when advertising his peripheral unit, the certain range in which the message (7) shall be distributed is specified by different distribution classes, including the classes "local", "walking distance" and "city wide", whereby the distribution class "local" covers approximately the size of a radio cell and / or the neighboring cells, the distribution class "walking distance" covers the certain range within a walking distance, and the distribution class "city wide" covers the certain range in the borders of a city.

2. Internet protocol based multimedia system according to claim 1, **characterized in that** the information (7) includes either a text message, a voice messages, a picture message or a video message, or a combination thereof.

3. A procedure for information exchange using an internet protocol based multimedia system according claims 1 or 2, by using means for location information and media components during information (7) exchange between a communication center (3) and peripheral units (1, 4), comprising the steps of:
including the means for location information and the media components in at least a mobile communications network (2),
providing at the communication center (3) a transmission of messages (7) via a mobile community service,
advertising a peripheral unit (1, 4) of a subscriber to the Internet protocol based multimedia system for approach of interested people within a certain range around the subscriber's current location by sending a message of a chosen media type to the communication center and receiving a set of chosen media types from people within a certain range, wherein the set of chosen media types to be received is decided by the subscriber which advertising his peripheral unit, and specifying the certain range in which the message (7) shall be distributed by different distribution classes, including the classes "local", "walking distance" and "city wide", whereby the distribution class "local" covers approximately the size of a radio cell and / or the neighboring cells, the distribution class "walking distance" covers the certain range within a walking distance, and the distribution class "city wide" covers the certain range in the borders of a city.

4. Procedure according to claim 3, **characterized in that** an application menu is operated in the terminal devices (1, 4) of users of the mobile communication network (2) to gain access to the mobile community service.

5. Procedure according to claims 3 or 4, **characterized in that** the mobile community service comprises an active mode wherein the subscriber becomes active and send messages (7) to mobile devices (4) of other users, and an inactive mode in which he receives other community members messages only.

6. Procedure according to claim 5, **characterized in that** in both modes the preferred name and media type of the messages (7) is specified.

7. Procedure according to claims 5 or 6, **characterized in that** in the active mode the user specifies the media type and the special content of the message to be sent to other users.

8. Procedure according to claims 3 to 7, **characterized in that** the messages are recorded directly by using the user's mobile terminal capabilities

9. Procedure according to claim 3 to 8, **characterized in that** the messages are chosen from a set of pre-recorded contents.

10. Procedure according to claim 9, **characterized in that** the contents are predefined and stored under a personal account via a web interface.

11. Procedure according to claim 9 or 10, **characterized in that** the stored contents are offered on a selection menu automatically to the subscriber if the active mode is selected.

12. Procedure according to claim 3 to 11, **characterized in that** web access to the Internet (5) is provided to all the users.

13. Procedure according to claim 3 to 12, **characterized in that** the users create content at a Personal Computer (6) and store it for later selection via the mobiles menu, where the pre-recorded content is shown up automatically when the mobile terminal community service module is activated.

14. Procedure according to claims 3 to 13, **characterized in that** the user specifies the region in which messages (7) can be sent and/or received.

15. Procedure according to claim 3 to 14, **characterized in that** the messages (7) are differentiated according to contact aims.

16. Procedure according to claim 3 to 15, **characterized in that** the messages (7) include details of personal interests.

## Patentansprüche

1. Internetprotokollbasiertes Multimediasystem, das Mittel für Standortinformationen und Medienkomponenten während eines Austauschs von Informationen (7) zwischen einer Kommunikationszentrale (3) und Peripherieeinheiten (1, 4) verwendet, wobei die Mittel für Standortinformationen und die Medienkomponenten in mindestens einem mobilen Kommunikationsnetz (2) vorgesehen sind und die Kommunikationszentrale (3) eine Übertragung von Nachrichten (7) über einen mobilen Community-Dienst zur Verfügung stellt, **dadurch gekennzeichnet, dass** ein Teilnehmer des internetprotokollbasierten Multimediasystems durch Senden einer Nachricht eines gewählten Medientyps an die Kommunikationszentrale und Empfangen eines Satzes ausgewählter Medientypen von Menschen innerhalb eines bestimmten Umkreises seine Peripherieeinheit (1, 4) bekannt geben kann, damit interessierte Menschen innerhalb eines bestimmten Umkreises um den aktuellen Standort des Teilnehmers mit ihm in Kontakt treten können, wobei der zu empfangende Satz ausgewählter Medientypen von dem Teilnehmer bestimmt wird, wenn er seine Peripherieeinheit bekannt gibt, wobei der bestimmte Umkreis, in dem die Nachricht (7) verteilt wird, durch unterschiedliche Verteilungsklassen festgelegt wird, welche die Klassen "örtlich", "zu Fuß zu erreichen" und "Stadtgebiet" enthalten, wobei die Verteilungsklasse "örtlich" ungefähr die Größe einer Funkzelle und/oder die benachbarten Zellen abdeckt, die Verteilungsklasse "zu Fuß zu erreichen" den bestimmten Umkreis abdeckt, der zu Fuß zu erreichen ist, und die Verteilungsklasse "Stadtgebiet" den bestimmten Umkreis innerhalb der Grenzen eines Stadtgebiets abdeckt.

2. Internetprotokollbasiertes Multimediasystem gemäß Anspruch 1, **dadurch gekennzeichnet, dass** die Informationen (7) entweder eine Textnachricht, eine Sprachnachricht, eine Bildnachricht oder eine Videonachricht oder eine Kombination davon enthalten.

3. Verfahren zum Informationsaustausch unter der Verwendung eines internetprotokollbasierten Multimediasystems gemäß den Ansprüchen 1 oder 2, wobei Mittel für Standortinformationen und Medienkomponenten während eines Austauschs von Informationen (7) zwischen einer Kommunikationszentrale (3) und Peripherieeinheiten (1, 4) verwendet werden, umfassend die folgenden Schritte:
Vorsehen der Mittel für Standortinformationen und der Medienkomponenten in mindestens einem mobilen Kommunikationsnetz (2),
Zur-Verfügung-Stellen einer Übertragung von Nachrichten (7) über einen mobilen Community-Dienst bei der Kommunikationszentrale (3),
Bekannt-Geben einer Peripherie-Einheit (1, 4) eines Teilnehmers an das Internetprotokollbasierte Multimediasystem durch Senden einer Nachricht eines gewählten Medientyps an die Kommunikationszentrale und Empfangen eines Satzes ausgewählter Medientypen von Menschen innerhalb eines bestimmten Umkreises, damit interessierte Menschen innerhalb eines bestimmten Umkreises um den aktuellen Standort des Teilnehmers herum mit diesem in Kontakt treten können, wobei der zu empfangende Satz ausgewählter Medientypen von dem Teilnehmer bestimmt wird, wenn er seine Peripherieeinheit bekannt gibt, und
Festlegen des bestimmten Umkreises, in dem die Nachricht (7) verteilt werden soll, durch unterschiedliche Verteilungsklassen, die die Klassen "örtlich", "zu Fuß zu erreichen" und "Stadtgebiet" enthalten, wobei die Verteilungsklasse "örtlich" ungefähr die Größe einer Funkzelle und/oder die benachbarten Zellen abdeckt, die Verteilungsklasse "zu Fuß zu erreichen" den bestimmten Umkreis abdeckt, der zu Fuß zu erreichen ist, und die Verteilungsklasse "Stadtgebiet" den bestimmten Umkreis innerhalb der Grenzen eines Stadtgebiets abdeckt.

4. Verfahren gemäß Anspruch 3, **dadurch gekennzeichnet, dass** ein Anwendungsmenu in den Endgeräten (1, 4) von Benutzern des mobilen Kommunikationsnetzes (2) bedient wird, um zu dem mobilen Community-Dienst Zugang zu erlangen.

5. Verfahren gemäß den Ansprüchen 3 oder 4, **dadurch gekennzeichnet, dass** der mobile Community-Dienst einen aktiven Modus, in dem der Teilnehmer aktiv wird und Nachrichten (7) an mobile Geräte (4) anderer Benutzer sendet, und einen inaktiven Modus umfasst, in dem er nur die Nachrichten anderer Mitglieder der Community empfängt.

6. Verfahren gemäß Anspruch 5, **dadurch gekennzeichnet, dass** in beiden Modi der bevorzugte Name und Medientyp der Nachrichten (7) festgelegt wird.

7. Verfahren gemäß den Ansprüchen 5 oder 6, **dadurch gekennzeichnet, dass** der Benutzer im aktiven Modus den Medientyp und den besonderen Inhalt der an andere Benutzer zu sendenden Nachricht festlegt.

8. Verfahren gemäß den Ansprüchen 3 bis 7, **dadurch gekennzeichnet, dass** die Nachrichten direkt unter der Verwendung der Fähigkeiten des mobilen Endgeräts des Benutzers aufgezeichnet werden.

9. Verfahren gemäß den Ansprüchen 3 bis 8, **dadurch gekennzeichnet, dass** die Nachrichten aus einer Menge im Voraus aufgezeichneter Inhalte gewählt werden.

10. Verfahren gemäß Anspruch 9, **dadurch gekennzeichnet, dass** die Inhalte vordefiniert sind und unter einem persönlichen Account über eine Web-Schnittstelle gespeichert werden.

11. Verfahren gemäß Anspruch 9 oder 10, **dadurch gekennzeichnet, dass** die gespeicherten Inhalte dem Benutzer automatisch über ein Auswahlmenu angeboten werden, wenn der aktive Modus ausgewählt wird.

12. Verfahren gemäß einem der Ansprüche 3 bis 11, **dadurch gekennzeichnet, dass** der Web-Zugang zum Internet (5) allen Benutzern zur Verfügung gestellt wird.

13. Verfahren gemäß einem der Ansprüche 3 bis 12, **dadurch gekennzeichnet, dass** die Benutzer Inhalte auf einem PC (6) erzeugen und sie speichern, damit sie zur späteren Auswahl über das mobile Menu zur Verfügung stehen, wobei der im Voraus gespeicherte Inhalt automatisch angezeigt wird, wenn das Community-Dienst-Modul des mobilen Endgeräts aktiviert wird.

14. Verfahren gemäß einem der Ansprüche 3 bis 13, **dadurch gekennzeichnet, dass** der Benutzer den Bereich festlegt, in dem Nachrichten (7) gesendet und/oder empfangen werden können.

15. Verfahren gemäß einem der Ansprüche 3 bis 14, **dadurch gekennzeichnet, dass** die Nachrichten (7) gemäß Kontaktzielsetzungen differenziert werden.

16. Verfahren gemäß einem der Ansprüche 3 bis 15, **dadurch gekennzeichnet, dass** die Nachrichten (7) Einzelheiten persönlicher Interessen enthalten.

## Revendications

1. Système multimédia fondé sur un protocole Internet (IMS) qui utilise des moyens pour des informations de position et des composants de média pendant un échange d'informations (7) entre un centre de communication (3) et des unités périphériques (1, 4), étant précisé que les moyens pour les informations de position et les composants de média sont inclus dans au moins un réseau de communications mobile (2), et que le centre de communication (3) fournit une transmission des messages (7) par l'intermédiaire d'un service de communauté mobile, **caractérisé en ce qu'**un abonné au système IMS peut annoncer la disponibilité de son unité périphérique (1, 4) en vue de l'approche de personnes intéressées dans une certain rayon autour de la position actuelle de l'abonné, en envoyant au centre de communication un message d'un type de média choisi et en recevant des personnes dans un certain rayon une série de types de média choisis, étant précisé que c'est l'abonné qui décide de la série de types de média choisis à recevoir, lorsqu'il annonce la disponibilité de son unité périphérique, et que ledit rayon dans lequel le message (7) sera distribué est spécifié par différentes catégories de distribution, comprenant les catégories "local", "distance à pied" et "urbain", la catégorie de distribution "local" couvrant approximativement la taille d'une cellule radio et/ou des cellules voisines, tandis que la catégorie de distribution "distance à pied" couvre le rayon correspondant à une distance à pied, et que la catégorie de distribution "urbain" couvre le rayon dans les limites d'une ville.

2. Système multimédia fondé sur un protocole Internet selon la revendication 1, **caractérisé en ce que** les informations (7) contiennent un message sous forme de texte, un message vocal, un message sous forme d'image ou un message vidéo, ou une combinaison de ceux-ci.

3. Procédure pour un échange d'informations à l'aide d'un système multimédia fondé sur un protocole Internet selon les revendications 1 ou 2, en utilisant des moyens pour des informations de position et des composants de média pendant un échange d'informations (7) entre un centre de communication (3) et des unités périphériques (1, 4), comprenant les étapes qui consistent
à inclure les moyens pour les informations de position et les composants de média dans au moins un réseau de communications mobile (2),
à fournir au niveau du centre de communication (3) une transmission des messages (7) par l'intermédiaire d'un service de communauté mobile,
à annoncer la disponibilité d'une unité périphérique (1, 4) d'un abonné audit système multimédia en vue de l'approche de personnes intéressées dans un certain rayon autour de la position actuelle de l'abonné, en envoyant au centre de communication un message d'un type de média choisi et en recevant des personnes dans un certain rayon une série de types de média choisis, étant précisé que c'est l'abonné qui décide de la série de types de média choisis à recevoir, lorsqu'il annonce la disponibilité de son unité périphérique,
à spécifier ledit rayon dans lequel le message (7) sera distribué, par différentes catégories de distribution, comprenant les catégories "local", "distance à pied" et "urbain", la catégorie de distribution "local" couvrant approximativement la taille d'une cellule radio et/ou des cellules voisines, tandis que la catégorie de distribution "distance à pied" couvre le rayon correspondant à une distance à pied, et que la catégorie de distribution "urbain" couvre le rayon dans les limites d'une ville.

4. Procédure selon la revendication 3, **caractérisée en ce qu'**un menu d'applications est utilisé dans les appareils terminaux (1, 4) d'utilisateurs du réseau de communication mobile (2) afin d'avoir accès au service de communauté mobile.

5. Procédure selon les revendications 3 ou 4, **caractérisée en ce que** le service de communauté mobile comprend un mode actif dans lequel l'abonné devient actif et envoie des messages (7) aux appareils mobiles (4) d'autres utilisateurs, et un mode actif dans lequel il ne reçoit que les messages d'autres membres de la communauté.

6. Procédure selon la revendication 5, **caractérisée en ce que** dans les deux modes, le nom et le type de média préférés des messages (7) sont spécifiés.

7. Procédure selon les revendications 5 ou 6, **caractérisée en ce que** dans le mode actif, l'utilisateur spécifie le type de média et le contenu spécial du message à envoyer à d'autres utilisateurs.

8. Procédure selon les revendications 3 à 7, **caractérisée en ce que** les messages sont enregistrés directement à l'aide des possibilités du terminal mobile de l'utilisateur.

9. Procédure selon les revendications 3 à 8, **caractérisée en ce que** les messages sont choisis à partir d'une série de contenus préenregistrés.

10. Procédure selon la revendication 9, **caractérisée en ce que** les contenus sont prédéfinis et mis en mémoire sous un compte personnel par l'intermédiaire d'une interface web.

11. Procédure selon la revendication 9 ou 10, **caractérisée en ce que** les contenus mis en mémoire sont proposés automatiquement à l'abonné sur un menu de sélection si c'est le mode actif qui est sélectionné.

12. Procédure selon les revendications 3 à 11, **caractérisée en ce que** l'accès web à l'Internet (5) est fourni à tous les utilisateurs.

13. Procédure selon les revendications 3 à 12, **caractérisée en ce que** les utilisateurs créent un contenu sur un ordinateur individuel (6) et le mettent en mémoire en vue d'une sélection ultérieure par l'intermédiaire du menu des mobiles, où le contenu préenregistré s'affiche automatiquement quand le module de service de communauté de terminal mobile est activé.

14. Procédure selon les revendications 3 à 13, **caractérisée en ce que** l'utilisateur spécifie la zone dans laquelle les messages (7) peuvent être envoyés et/ou reçus.

15. Procédure selon les revendications 3 à 14, **caractérisée en ce que** les messages (7) sont différenciés suivant les contacts visés.

16. Procédure selon les revendications 3 à 15, **caractérisée en ce que** les messages (7) incluent des détails d'intérêts personnels.
